# EUROPEAN PATENT APPLICATION

(11) **EP 2 669 495 A1**
(43) Date of publication of application: **04.12.2013**
(21) Application number: 12170541.2
(22) Date of filing: 01.06.2012
(51) Int. Cl.: F02D 17/02, F01L 13/00, F01L 9/02, F02D 13/06

(54) **Method for operating a multi-cylinder internal combustion engine**

(71) Applicant: ABB Turbo Systems AG, 5400 Baden (CH)
(72) Inventor: Brand, Daniel, 5200 Brugg (CH); Christen, Claudio, 5442 Fislisbach (CH)
(74) Representative: ABB Patent Attorneys

(57) **Abstract**

The inventive adjustment of the exhaust valve opening prior to the shutdown of a selected cylinder of a multi-cylinder internal combustion engine allows controlling the amount of exhaust gas to remain in the cylinder. The mass of exhaust gas left in the cylinder is large enough on the one hand, such that the pressure in the cylinder does not undercut the pressure level where the valves unintentionally open due to gas forces but also small enough on the other hand, such that the maximum allowed in-cylinder pressure is not exceeded.

## Description

### Background of the Invention

The invention relates to a method for shutting down and restarting individual cylinders of a multi-cylinder internal combustion engine.

Upcoming tight emission legislation force R&D activities to be directed to the development of emission reduction technologies and methods for different types of combustion engines.

Supercharged Diesel engines tend to emit less NOx emissions at high engine load than at part load, in particular Diesel engines equipped with emission reduction technology e.g. such as Miller cycle and variable valve timing, variable compression ratio, variable inlet receiver temperature and others. Furthermore, engines running with HFO (heavy fuel operation) have more wear and tear and cause increased service effort when running mainly at part load. Thus, a benefit arises from maintaining the full load combustion and emission pattern even at lower engine loads. Cylinder shutdown is a known method. If possible, cylinder shutdown should be realized by leaving inlet and outlet valves closed and turning off the fuel injection of the shutdown cylinder and redirecting the respective amount of fuel to the active cylinders. When doing so, the diesel engine's turbocharger operation remains unchanged, otherwise the matching of the turbocharger to the engine has to be checked and adapted if needed. When leaving the valves of the shutdown cylinder(s) closed, the gas forces on the valve(s) can be large enough to unintentionally open the valve(s) against the spring forces.

Torque control of port-injected gas engines is realized by controlling the receiver pressure using certain control organs and by adjusting the amount of injected fuel gas. Typically, organs controlling the receiver pressure cause losses which grow with the extent of torque reduction. Running a reduced number of cylinders at high load and shutdown of the others allows for control organ settings with reduced losses. For port-injected engines, cylinders could be shut down without closing the valves by turning off the fuel gas injection and redirecting the respective amount of fuel to the active cylinders (similar as in the case of Diesel engines). However, closing the valves of shut down cylinders and redirecting the respective amount of fuel to the active cylinders allows for unchanged turbocharger operation and for control organ settings with even lower losses. When leaving the valves closed, the gas forces on the valve can be large enough to unintentionally open the valves against the spring forces.

Torque control of premix gas engines is realized by controlling the receiver pressure using certain control organs. Typically, such control organs cause losses which grow with the extent of torque reduction. Running a reduced number of cylinders at high cylinder-individual load and shut down the others allows for control organ settings with reduced losses. For premix gas engines, at least either inlet or exhaust valves of shut down cylinders have to remain closed; otherwise unburned mixture would escape to the exhaust. The advantage of closing both inlet and exhaust valves of deactivated cylinders is a reduction of gas friction losses. As described above, with closed valve(s) measures have to be taken to avoid unintentional opening. Additionally, measures have to be taken to avoid auto-ignition/knock in the deactivated cylinder(s) of premix gas engines.

### Background Art

A method for shutting down and restarting individual cylinders of a multi-cylinder internal combustion engine by deactivating the charge change valves and the fuel injection is disclosed in U.S. Patent No. 5,803,040, in which the activation or deactivation of the inlet and exhaust valves is controlled time-wise in such fashion that the shutdown of the cylinder takes place after one inlet stroke and the restart of the cylinder takes place before an inlet stroke, thus ensuring that hot exhaust always remains in the shut-down cylinder so that cooling of the combustion chamber is largely prevented. When the cylinder is restarted, this exhaust is first expelled out of the combustion chamber, and only then is a new air/fuel mixture drawn in.

Various other documents, known in the art, disclose variable valve train systems that allow influencing the effective area by reducing one or both of the opening time and the valve lift or even to leave the valves completely closed:
U.S. Patent No. 4,050,435 discloses such a system comprising deactivating means between a valve pushrod and its respective valves.
EP Patent Application No. 0 186 341 discloses another engine valve train system for selectively effecting operation of a pair of side by side valves of a particular cylinder and to effect deactivation of one of the valves in the pair during predetermined modes of engine operation.

In "VCM Valve Control Management - the heart rate reactor", CHTUS-1264-1008-300-EN, the Applicant has disclosed a variable valve train system for large four stroke diesel and gas engines (above 400 kW output) that allows variation of both valve timing and lift, reducing harmful exhaust emissions and allowing engine performance to be adapted to the operating profile of a given engine application.

### Summary of the Invention

It is an object of the present invention to improve a method for shutting down and restarting individual cylinders of a multi-cylinder internal combustion engine by avoiding unintentional opening of the inlet and outlet valves and/ or auto-ignition/knock in the shutdown cylinders of the combustion engine.

This object is achieved by the method according to the invention, in which, when an individual cylinder is shut down, a time sequence for activation or deactivation of inlet and exhaust valves is controlled such that a shutdown of said selected cylinder takes place after an inlet stroke, the succeeding combustion process and the succeeding exhaust stroke, whereas the exhaust valve opening in this last exhaust stroke prior to the shutdown of said selected cylinder is adjusted to retain a partial amount of the exhaust gas in the cylinder.

The inventive adjustment of the exhaust valve opening prior to the shutdown of said cylinder allows controlling the amount of exhaust gas to remain in the cylinder. The mass of exhaust gas is to be large enough on the one hand, such that the pressure in the cylinder does not undercut the pressure level where the valves unintentionally open due to gas forces but also small enough on the other hand, such that the maximum allowed in-cylinder pressure is not exceeded.

Restarting of said selected cylinder takes place after a last skipped combustion by returning to the nominal exhaust valve lift and a succeeding nominal inlet valve lift according to the operation of the selected cylinder.

With the present invention the shutdown cylinders contain mainly air and burnt gas only which prohibits auto-ignition/knock.

### Brief Description of the Drawing

Fig. 1 shows a prior art variable valve train system,
Fig. 2 illustrates the inventive method for shutting down and restarting an individual cylinder in a schematic diagram of the valve lift curves of the inlet and exhaust valves of a cylinder and the pressure curve of the pressure in the cylinder before, during and after a cylinder shutdown,
Fig. 3 shows a schematic diagram of the valve lift curve of a charge change valve with limited valve lift versus full lift,
Fig. 4 shows a schematic diagram of the valve lift curve of a charge change valve with a reduced opening time (early closing) versus full lift,
Fig. 5 illustrates the pressure-changes in a cylinder during an exemplary shotdown sequence,
Fig. 6 illustrates the pressure-changes in a cylinder during an exemplary restart sequence, and
Fig. 7 illustrates the pressure-changes in a cylinder during an exemplary shotdown sequence with a heat loss to the cylinder wall.

### Description of the Preferred Embodiments

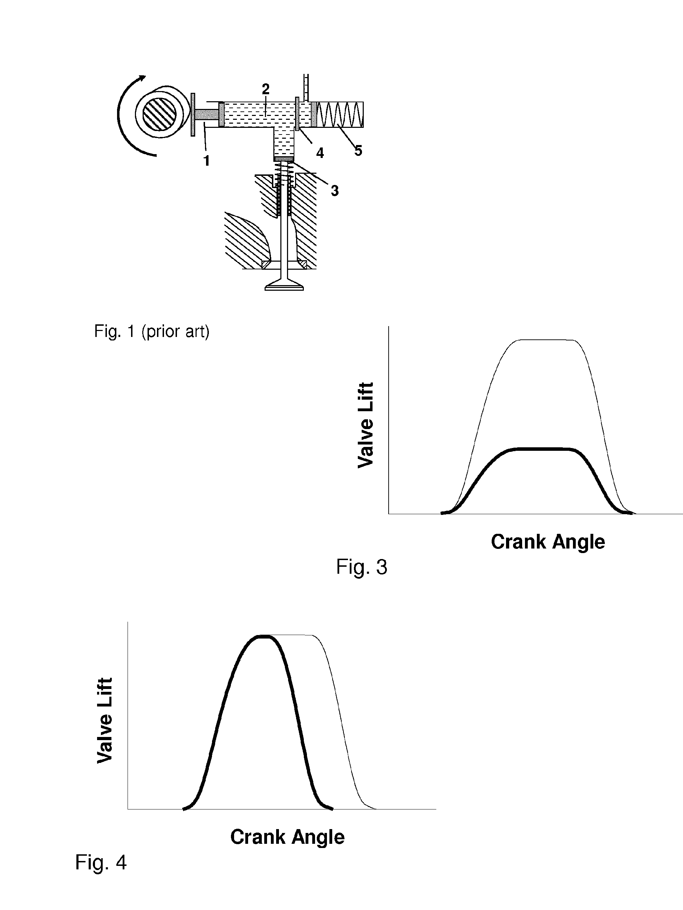

Fig. 1 shows a variable valve train system of the kind disclosed by the Applicant in the above mentioned publication. Variation in valve timing and lift is achieved by interposing a high pressure fluid chamber 2 into the engine valve train between the valve and its mechanical actuation system. The chamber 2 filled with fluid is pressurized by a camshaft actuated pump 1. A piston driven by the fluid pressure in chamber 2 and the valve spring forces actuates the inlet or exhaust valve(s), respectively. A valve 4 varies the filling and the pressure of the chamber 2 and the loading of the pressure accumulator 5. Controlling the opening and the closing of the valve 4 enables both the timing of the opening and the closing of the valve irrespective of the camshaft position as well as the distance the valve opens (valve lift). Figs. 3 and 4 show schematically two possibilities to reduce the effective area of a full valve lift (thin line) by either limiting the valve lift (thick line in Fig. 3) or by an early closing of the valve (thick line in Fig. 4). Of course, timing of the opening and closing of the valves as well as valve lift can be combined to achieve reduced effective areas.

The variable valve train systems described are only possible embodiments. Of course, other devices can be used. The critical aspect however is that control allows to set different valve timings or valve lifts on a cycle-to-cycle and cylinder-to-cylinder individual basis as well as a precise adjustment of the trapped mass in the cylinder.

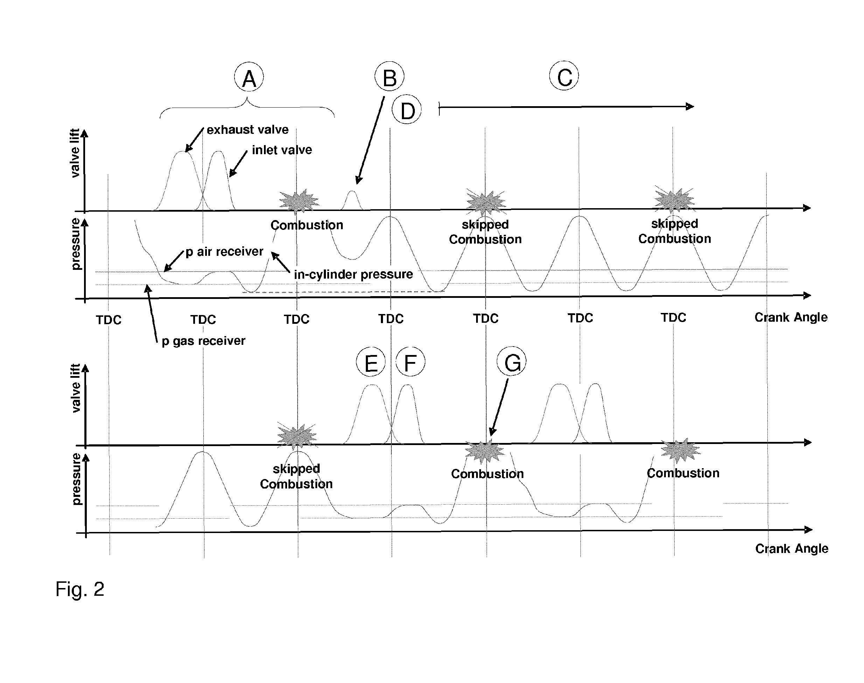

FIG. 2 shows the valve lift curves of the inlet valve and the exhaust valve for a single cylinder as an example, shown schematically before, during, and after a cylinder shutdown when the method according to the invention is implemented.

During a normal operating cycle of a cylinder of the internal combustion engine, that is when the cylinder is not shut down, both inlet valve and exhaust valve opens according to a nominal pattern assigned to the operation of that cylinder. The crankshaft ranges in which the cylinder shutdown process is not yet activated is labeled (A) in the diagram at the upper left corner. The nominal pattern depicted serves as an example and might vary between different engine types or versions.

Once a shut down time sequence is initiated by the combustion engines control unit, the normal operating cycle is followed through the combustion process, leaving the full amount of exhaust gas in the cylinder to be shut down. In the very next step of the inventive method, a partial amount of this exhaust gas is removed from the cylinder by a limited opening of the exhaust valve, indicated in the diagram with the reduced lift curve at label (B). In particular, the exhaust valve opening duration or valve lift in step (B) is adjusted, limiting the blow out of exhaust gas to the exhaust gas receiver. The remaining mass of exhaust gas in the cylinder is large enough such that the pressure in the cylinder does not undercut the pressure level where the valves unintentionally open due to gas forces and small enough that the maximum allowed in-cylinder pressure is not exceeded. As a consequence, the maximum pressure in the cylinder for the following cycles is reduced and the risk of unintentional opening of the valves is avoided while all the advantages of keeping - at least a partial amount of - the exhaust gas in the cylinder are maintained.

The following cycles in the diagram are processed without opening any inlet or exhaust valves. Any number of operating cycles can take place between the cylinder being shut down and its restart, therefore the angle axis is interrupted and the diagram split in an upper (shutdown) and a lower (restart) section

Once the re-activation time sequence is initiated by the combustion engines control unit, the re-activation of the cylinder is commenced after a final skipped inlet stroke and a final skipped combustion. First, the exhaust valve opens according to its nominal pattern at label (E) to remove the remaining exhaust gas from the cylinder, followed by a nominal pattern of inlet valve at label (F) to fill the cylinder with fresh air or a fresh air / fuel gas mixture, depending on the combustion engine type. During the following high pressure cycle, the first combustion after the shutdown is initiated.

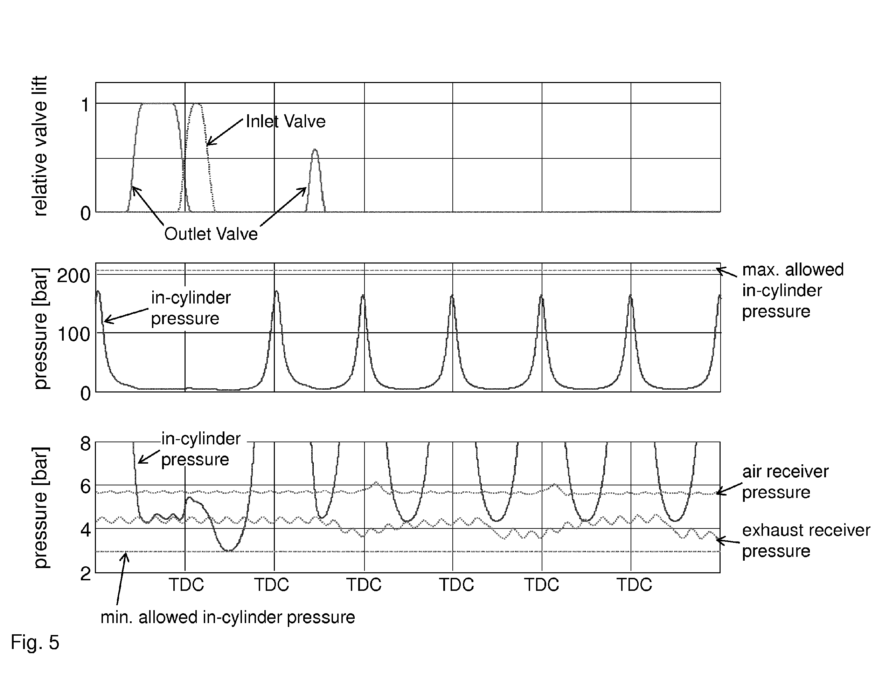

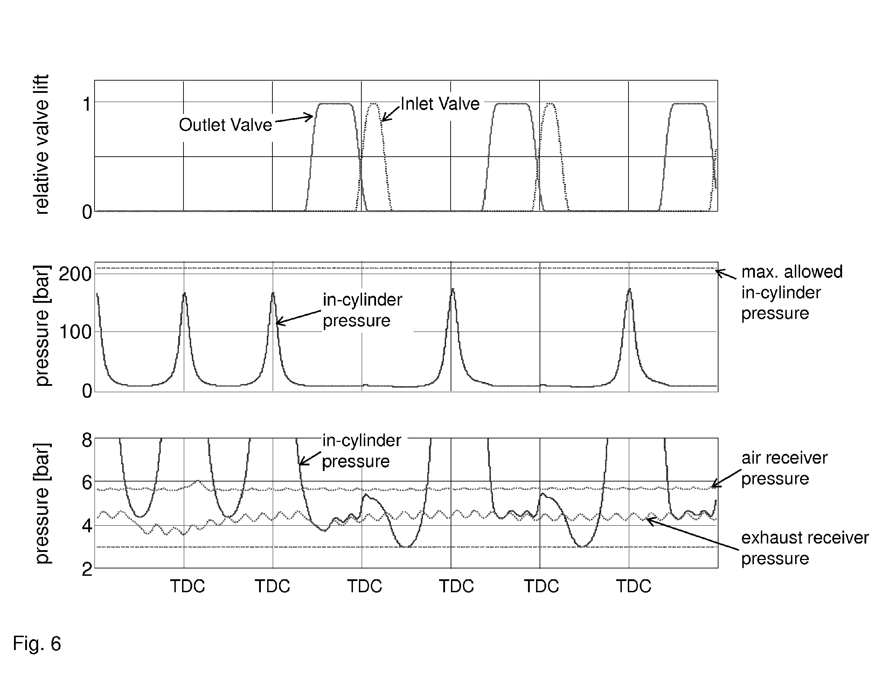

Figures 5 to 7 illustrate exemplary sequences of a shutdown and a subsequent restart of a single cylinder. The three diagrams each show from top to bottom
- the relative valve lift over time,
- the in-cylinder pressure in relation to the maximal allowed in-cylinder pressure over time, and
- the in-cylinder pressure in relation to the minimal allowed in-cylinder pressure, compared to the air receiver and the exhaust receiver pressure over time.

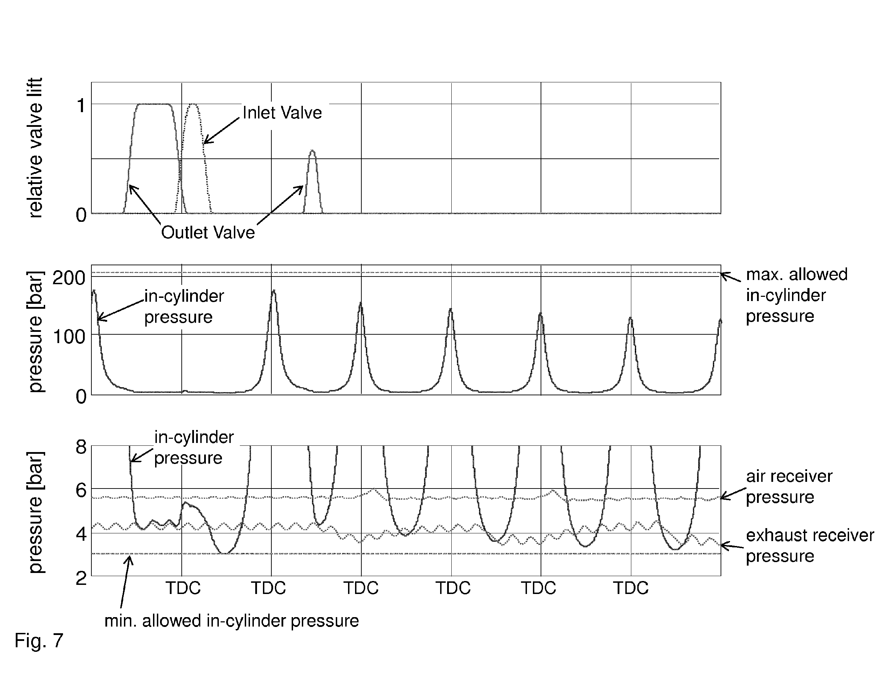

In order to avoid significant heat loss to the cylinder wall in a single cylinder of a multi-cylinder engine, the inventive method can optionally be applied to several or all the cylinders in an alternating pattern. In this case, a previously shut down cylinder has to be restarted again and another cylinder will be shut down instead. That way, the risk of the in-cylinder pressure of the first cylinder touching the line of the minimal allowed in-cylinder pressure in Fig. 7, bottom right corner of the graph, can be substantially reduced.

## Claims

1. Method for shutting down and starting of individual cylinders of a multi-cylinder internal combustion engine having at least one inlet valve and at least one exhaust valve per cylinder, with said valves of a selected individual cylinder being deactivated or re-activated during a shutdown or restart of said selected cylinder by means of a suitable device, whereas
when said selected cylinder is switched, a time sequence for deactivation or re-activation of inlet and exhaust valves is controlled such that a shutdown of said selected cylinder takes place after an inlet cycle (1), the succeeding combustion process and the succeeding exhaust stroke (2), whereas the exhaust valve opening in this last exhaust stroke prior to the shutdown of said selected cylinder is adjusted to retain a partial amount of the exhaust gas in the cylinder, and a restart of said selected cylinder takes place before one exhaust stroke (5) and after a next preceding inlet stroke thereof.

2. Method of Claim 1, whereas the adjustment of the exhaust valve opening is done by limiting the degree of opening of the exhaust valve.

3. Method of any of Claims 1 or 2, whereas the adjustment of the exhaust valve opening is done by reducing the duration of opening of the exhaust valve.

4. Method of Claim 1, whereas the adjustment of the exhaust valve opening is done by a combination of reducing the duration of opening of the exhaust valve and limiting the degree of opening.

5. Method for running a multi-cylinder combustion engine having at least one inlet valve and at least one exhaust valve per cylinder, in which method cylinders of said engine are shut down and restarted in an alternating pattern to avoid undercutting of the minimum allowable in-cylinder pressure due heat transfer to the cylinder wall.
